# EUROPÄISCHE PATENTSCHRIFT

(11) **EP 2 453 217 B1**
(45) Veröffentlichungstag und Bekanntmachung des Hinweises auf die Patenterteilung: **01.04.2015**
(21) Anmeldenummer: 11187979.7
(22) Anmeldetag: 04.11.2011
(51) Int. Cl.: G01G 21/28

(54) **Nahtlose Wagenkörper und Verfahren zur Herstellung**
Seamless scale body and method for producing the same
Corps de balance sans soudure et procédé de fabrication

(30) Priorität: 16.11.2010 DE 102010060606
(43) Veröffentlichungstag der Anmeldung: 16.05.2012
(73) Patentinhaber: Janner, Siegfried, 92708 Mantel (DE)
(72) Erfinder: Janner, Siegfried, 92708 Mantel (DE)
(74) Vertreter: Lang, Christian

(56) Entgegenhaltungen:
- CN-Y- 201 130 055
- US-A- 2 668 045
- US-A- 4 565 255
- US-A- 4 832 142
- US-A1- 2006 207 805

## Beschreibung

### HINTERGRUND DER ERFINDUNG

### GEBIET DER ERFINDUNG

Die vorliegende Erfindung betrifft eine Tisch- oder Plattformwaage mit einer oberen Rahmenkonstruktion und einer unteren Rahmenkonstruktion, die über eine Wägezelle miteinander verbunden sind, sodass das Gewicht eines Gegenstandes, welcher auf der oberen Rahmenkonstruktion abgelegt ist, bestimmt werden kann. Darüber hinaus betrifft es eine entsprechende Rahmenkonstruktion bzw. einen entsprechenden Waagenkörper für eine Tisch- oder Plattformwaage.

### STAND DER TECHNIK

Tisch- oder Plattformwaagen mit einer oberen oder unteren Rahmenkonstruktion (Waagenkörper), die über eine Wägezelle miteinander verbunden sind, sind aus dem Stand der Technik bereits bekannt.

Derartige Tisch- oder Plattformwaagen sind meist so ausgebildet, dass die obere und untere Rahmenkonstruktion in Form einer rechteckigen Rohrkonstruktion ausgebildet ist, bei dem beispielsweise Vierkantrohre zu einem rechteckigen Rahmen zusammen geschweißt sind. An die rechteckige Vierkantrohrkonstruktion werden dann weitere Bauteile angeordnet, um beispielsweise auch eine entsprechende Verbindung mit einer Wägezelle zu schaffen.

Der Nachteil derartiger Konstruktionen besteht darin, dass sie in der Herstellung relativ aufwendig sind.

Dies gilt auch für Personenwaagen bzw. Plattformwaagen wie sie in der US 2006/0207805 A1 und der US 4,832,142 beschrieben sind, die tief gezogene Plattformen bzw. Rahmenkonstruktionen aufweisen. Ein weiteres Beispiel für eine Personenwaage ist in der US 2,668,045 gegeben. Ein weiterer Stand der Technik ist die CN 2011 30055 Y.

### OFFENBARUNG DER ERFINDUNG

### AUFGABE DER ERFINDUNG

Es ist deshalb Aufgabe der vorliegenden Erfindung eine Tisch- oder Plattformwaage bzw. eine entsprechende Rahmenkonstruktion für eine Tisch- oder Plattformwaage sowie ein Herstellungsverfahren für dieselbe bereitzustellen, bei welchen der Aufwand für die Herstellung reduziert werden kann, sodass eine effektive Herstellung und somit kostengünstige Herstellung erreicht werden kann. Gleichzeitig soll jedoch die Festigkeit und Steifheit, insbesondere die Verwindungssteifheit der entsprechenden Rahmenkonstruktion beibehalten oder verbessert werden, sodass eine hoch präzise messende, zuverlässige sowie ästhetisch ansprechende Tisch- oder Plattformwaage hergestellt werden kann.

### TECHNISCHE LÖSUNG

Diese Aufgabe wird gelöst durch eine Tisch- oder Plattformwaage mit den Merkmalen des Anspruch 1 sowie einem Herstellungsverfahren mit den Merkmalen des Anspruchs 6. Vorteilhafte Ausgestaltungen sind Gegenstand der abhängigen Ansprüche.

Die Erfindung geht aus von der Erkenntnis, dass eine effektivere Herstellung dadurch erreicht werden kann, dass die entsprechenden Rahmenkonstruktionen bzw. -teile für die Tisch- oder Plattformwaagen nicht mehr geschweißt werden, sondern durch einfache Trennvorgänge und Biegevorgänge hergestellt werden. Entsprechend werden die Rahmenkonstruktionen einer Tisch- oder Plattformwaage oder zumindest eine davon, einstückig aus einer monolithischen Platte gefertigt. Eine derartige monolithische Platte kann beispielsweise eine Stahlplatte, insbesondere eine Edelstahlplatte sein, die als homogene, rechteckige Platte als Ausgangsmaterial bereitgestellt wird. Insbesondere kann die Rahmenkonstruktion durch eine homogene Platte gebildet werden, die keine stoffschlüssigen Verbindungen, wie beispielsweise Schweißnähte aufweist. Auch die Rahmenkonstruktion an sich benötigt entsprechend keine stoffschlüssigen Verbindungen, insbesondere Schweißnähte. Die Rahmenkonstruktionen werden hierbei insbesondere durch die Bauteile gebildet, die unmittelbar mit der Wägezelle in Verbindung stehen und gegebenenfalls über weitere Bauteile mit einer Standfläche bzw. dem zu wiegenden Gut in Verbindung stehen. Vorzugsweise können auch sämtliche anderen Bauteile der Tisch- oder Plattformwaage, wie beispielsweise Standfüße, Tischabdeckung und dgl. ohne stoffschlüssige Verbindungen, insbesondere ohne Schweißnähte, an der Waage angeordnet sein.

Die Rahmenkonstruktion kann Ausnehmungen, Öffnungen und abgewinkelte Bereiche umfassen, insbesondere abgewinkelte Bereiche, die um einen Winkel von 90° gegenüber der ursprünglichen Plattenebene abgewinkelt sind.

Die abgewinkelten Bereiche können zumindest teilweise am äußeren Umfangsrand der aus der Platte gebildeten Rahmenkonstruktion und/oder am Rand von Ausnehmungen vorgesehen sein. Die abgewinkelten Bereiche können entsprechend quer, insbesondere senkrecht zur Hauptfläche der Platte angeordnet sein, sodass so genannten Kantenwinkel ausgebildet sind, was bedeutet, dass die Rahmenkonstruktion im Bereich des Randes im Querschnitt die Form eines Winkelprofils aufweist.

Die Hauptfläche der Rahmenkonstruktion bzw. der Platte, aus der die Rahmenkonstruktion gefertigt ist, ist diejenige Fläche, die die größte Fläche darstellt. Bei einer quaderförmigen Platte ist die Hauptfläche somit durch die Längsseite und die Breitseite aufgespannt, welche die größten Dimensionen aufweisen, während die Dickenrichtung die geringste Dimension besitzt.

Die abgewinkelten Bereiche können an gegenüber liegenden Kanten ausgebildet sein und sich in derselben Richtung von der Hauptfläche der Platte erstrecken, um im Querschnitt U-förmige Profile auszubilden, die eine hohe Stabilität und Steifheit der Rahmenkonstruktion gewährleisten.

Die Platte bzw. Rahmenkonstruktion kann in der Draufsicht auf die Hauptfläche eine H-förmige Form aufweisen, wobei der Verbindungssteg zwischen den senkrecht stehenden Teilen des H sich in Richtung der Längsseite der Platte erstreckt.

Um eine einfachere Biegung der abgewinkelten Bereiche zu ermöglichen, kann im Krümmungsbereich, der den abgewinkelten Bereich mit der Hauptfläche verbindet, teilweise mit Öffnungen versehen sein. Dadurch wird die Biegekante geschwächt und es ist ein einfacheres Abwinkeln möglich. Gleichzeitig kann jedoch gewährleistet werden, dass die Eigenschaften hinsichtlich Festigkeit und Stabilität die erforderlichen Werte erreichen.

Die abgewinkelten Bereiche können beim Zusammenbau der Rahmenkonstruktionen zur Tischwaage oder Plattformwaage entsprechend aufeinander zuweisen und sich teilweise überlappen, sodass durch die Rahmenkonstruktionen ein weitgehend abgeschlossenes Gehäuse gebildet werden kann.

### KURZE BESCHREIBUNG DER FIGUREN

Die beigefügten Figuren zeigen in
- Fig. 1: eine Draufsicht auf eine erfindungsgemäße Tischwaage;
- Fig. 2: eine Seitenansicht der Längsseite der Tischwaage aus Fig. 1;
- Fig. 3: eine Schnittansicht durch die Tischwaage aus Fig. 1 entlang der Schnittlinie B;
- Fig. 4: eine Seitenansicht der Schmalseite der Tischwaage aus Fig. 1;
- Fig. 5: eine Schnittansicht der Tischwaage aus Fig. 1 entlang dem Schnitt A;
- Fig. 6: eine Detailansicht aus der Schnittansicht in der Fig. 3;
- Fig. 7: eine perspektivische Darstellung der Tischwaage aus Fig. 1 von der Unterseite;
- Fig. 8: eine Draufsicht auf die Tischwaage der Figuren 1 bis 7 von unten;
- Fig. 9: eine perspektivische Ansicht einer Abdeckung für die Tischwaage aus den Figuren 1 bis 8;
- Fig. 10: eine Draufsicht auf die Abdeckung der Fig. 9;
- Fig. 11: eine Seitenansicht der Längsseite der Abdeckung aus Fig. 9;
- Fig. 12: eine Draufsicht auf die Abdeckung der Fig. 9 von unten;
- Fig. 13: eine Schnittansicht durch die Abdeckung der Fig. 9 gemäß der Schnittlinie A aus Fig. 1
- Fig. 14: eine Draufsicht auf das obere Rahmenteil der Tischwaage aus den Figuren 1 bis 8;
- Fig. 15: eine Seitenansicht des oberen Rahmenteils aus Fig. 14;
- Fig. 16: eine Schnittansicht durch das obere Rahmenteil aus Fig. 14 entlang der Schnittlinie B au Fig. 1;
- Fig. 17: eine Seitenansicht des oberen Rahmenteils aus Fig. 14 von der Schmalseite;
- Fig. 18: eine Schnittansicht durch das obere Rahmenteil aus Fig. 14 entlang der Schnittlinie A aus Fig. 1;
- Fig. 19: eine Draufsicht auf das untere Rahmenteil der Tischwaage aus den Figuren 1 bis 8;
- Fig. 20: eine Seitenansicht des unteren Rahmenteils aus der Fig. 19 von der Längsseite;
- Fig. 21: eine Schnittansicht durch das untere Rahmenteil aus Fig. 19 entlang der Schnittlinie B au Fig. 1;
- Fig. 22: eine Seitenansicht des unteren Rahmenteils aus Fig. 19 von der Schmalseite;
- Fig. 23: eine Schnittansicht durch das untere Rahmenteil entlang der Schnittlinie A aus Fig. 1;
- Fig. 24: eine perspektivische Darstellung eines Teils der Tischwaage aus Fig. 1 von unten bei umgedrehter Tischwaage; und in
- Fig. 25: eine perspektivische Darstellung eines Teils der Tischwaage aus Fig. 1 von oben.

### AUSFÜHRUNGSBEISPIEL

Weitere Vorteile, Kennzeichen und Merkmale der vorliegenden Erfindung werden bei der nachfolgenden Beschreibung eines Ausführungsbeispiels anhand der beigefügten Zeichnungen deutlich.

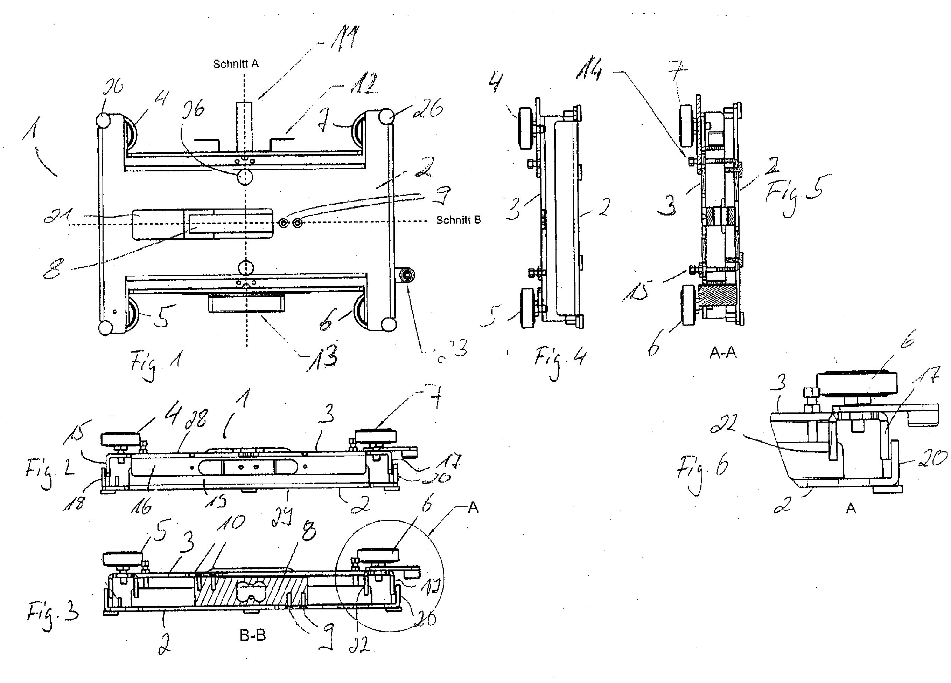

In Fig. 1 ist eine Draufsicht auf eine Tischwaage 1 ohne Tisch bzw. Abdeckung zu sehen, sodass im Wesentlichen die Rahmenkonstruktionen mit oberem und unterem Rahmenteil 2,3 zu erkennen sind.

In der Draufsicht der Fig. 1 ist das obere Rahmenteil 2 zu sehen, welches über eine Wägezelle mit dem unteren Rahmenteil 3 verbunden ist. Das obere Rahmenteil 2 ist über zwei Schrauben 9 an der Wägezelle 8 befestigt, die, wie wiederum in Fig. 3 zu sehen ist, mit zwei Schrauben 10 mit dem unteren Rahmenteil 3 verbunden ist. Die Wägezelle 8 ist durch eine Aussparung 21 in der Platte des oberen Rahmenteils 2 zu erkennen, wobei die Aussparung 21 dazu dient eine Kollision der Platte des oberen Rahmenteils 2 mit der Wägezelle 8 bzw. eine Beeinflussung der Wägezelle 8 durch die Platte des oberen Rahmenteils 2 zu vermeiden.

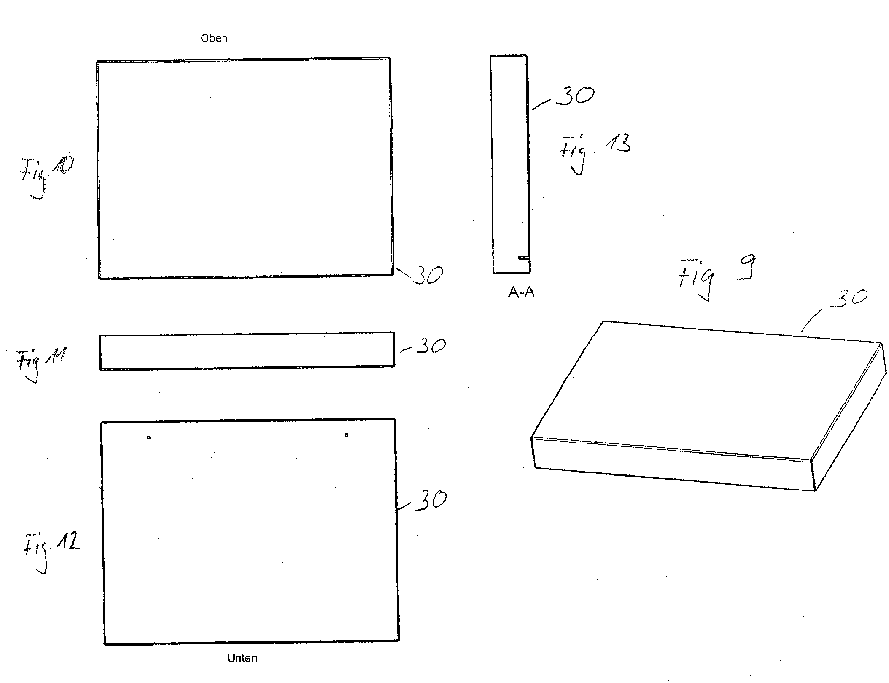

Am oberen Rahmenteil 2 sind Auflager 26 angeordnet, auf denen der Tisch bzw. die Abdeckung 30 (s. Figuren 9 bis 13) der Tischwaage gelagert wird.

In der Draufsicht der Fig. 1 ist zudem ein Teil der Füße 4, 5, 6, 7 zu erkennen, die am unteren Rahmenteil 3 über Schraubverbindungen angeordnet sind.

An der Tischwaage 1 sind des Weiteren zusätzliche Anbauteile vorgesehen, wie beispielsweise eine Halterung 11 für eine Zusatzeinrichtung, eine Kabelhalterung 12 sowie ein Kabelschaltkasten 13 für einen Analog-Digital-Wandler (A/D-Wandler). Darüber hinaus ist an einer Schmalseite bzw. Stirnseite der Rahmenkonstruktionen, genauer gesagt am unteren Rahmenteil 3 eine Libelle 23 angeordnet, die eine waagrechte Aufstellung der Tischwaage 1 ermöglicht.

Die Fig. 2 zeigt die Tischwaage 1 aus Fig. 1 in einer Seitenansicht von der Längsseite. In der Darstellung der Fig. 2 ist die Tischwaage 1 auf den Kopf gestellt, sodass die Füße 4, 7 nach oben zeigen.

Die Fig. 2 zeigt, dass sowohl das obere Rahmenteil 2 als auch das untere Rahmenteil 3 in den Randbereichen entlang des Umfangs abgewinkelte Bereiche 15, 16, 17, 18, 19, 20 aufweisen, die teilweise ineinander greifen und sich überlappen. So umgreift das obere Rahmenteil 2 an den Schmalseiten das untere Rahmenteil 3, während an den Längsseiten das untere Rahmenteil 3 das obere Rahmenteil 2 umgreift.

Die abgewinkelten Bereich 15 bis 20 sind im rechten Winkel zu den Hauptflächen 28 und 29 des unteren Rahmenteils 3 bzw. des oberen Rahmenteils 2 angeordnet.

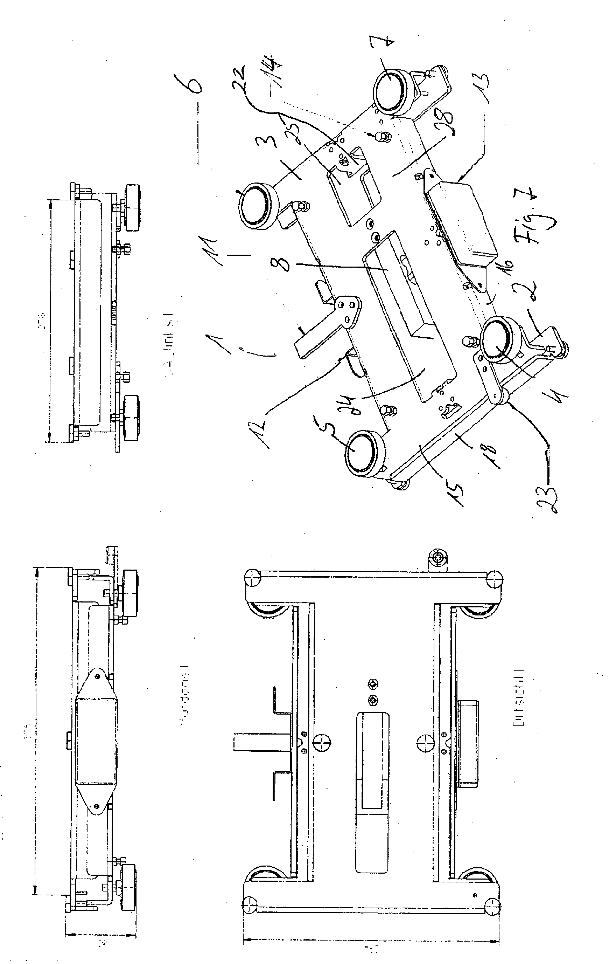

In der Schnittansicht der Fig. 3 ist die Anordnung vom oberen Rahmenteil 2 und unterem Rahmenteil 3 an der Wägezelle 8 detaillierter dargestellt und es ist zu erkennen, dass auch am Rand einer Aussparung im unteren Rahmenteil (s. Fig. 7) ein abgewinkelter Bereich 22 vorgesehen ist, sodass dieser zusammen mit dem abgewinkelten Bereich 17 am äußeren Umfang des unteren Rahmenteils 3 ein U-förmiges Profil ergibt. Dies ist detailliert in der Fig. 6 dargestellt.

Die abgewinkelten Bereiche 15 bis 20, 22 werden durch Biegen der entsprechenden Bereiche aus der Plattenebene des oberen und unteren Rahmenteils 2, 3 gebildet. Hierzu müssen nur entsprechende Schnitte in einer planen Platte ausgeführt werden bzw. entsprechende Aussparungen in der Platte des oberen und unteren Rahmenteils 2, 3 vorgesehen werden, welche beispielsweise durch bekannte mechanische Trennverfahren oder durch Laserschneiden oder dergleichen realisiert werden können.

Die Fig. 7 zeigt die Rahmenkonstruktionen der Tischwaage 1 in einer perspektivischen Darstellung von der Unterseite. Die untere Rahmenkonstruktion in Form des unteren Rahmenteils 3 greift mit den entsprechend abgewinkelten Bereichen 15 in die obere Rahmenkonstruktion in Form des oberen Rahmenteils 2 ein, sodass der abgewinkelte Bereich 18 an der Schmalseite des oberen Rahmenteils 2 den abgewinkelten Bereich 15 des unteren Rahmenteils 3 umgreift. In gleicher Weise umgreift der abgewinkelte Bereich 16 des unteren Rahmenteils 3 den abgewinkelten Bereich des oberen Rahmenteils 2 an der Längsseite (nicht gezeigt).

Neben den Anbauteilen 11, 12, 13, die über Schraubverbindungen an dem unteren Rahmenteil 3 angeordnet sind, befinden sich an dem unteren Rahmenteil 3 insgesamt 4 Stellschrauben 14, welche als Überlastsicherungen dienen, wie in Fig. 5 dargestellt ist. Die Stellschrauben 14 halten das obere Rahmenteil 2 in einem definierten Abstand zum unteren Rahmenteil 3, sodass die Wägezelle 8 nicht überlastet werden kann.

In der perspektivischen Darstellung der Fig. 7 sind auch zwei Aussparungen 24, 25 in der Hauptfläche 28 des unteren Rahmenteils 3 dargestellt, an deren Kanten zumindest teilweise abgewinkelte Bereiche 22 vorgesehen sind. Die Aussparung 24 dient ähnlich der Aussparung 21 des oberen Rahmenteils 2 zur Vermeidung unerwünschter Beeinflussungen der Wägezelle 8.

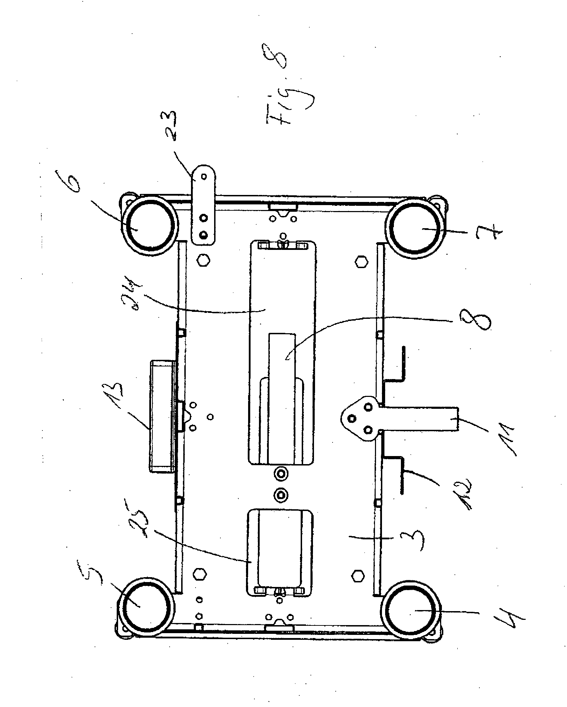

Die Fig. 8 zeigt die Tischwaage 1 mit ihren Rahmenkonstruktionen 2,3 ohne Abdeckung 30 von der Unterseite, während die Figuren 9 bis 10 die Abdeckung 30, die über das obere Rahmenteil 2 gestülpt wird, in den Fig. 9 bis 13 in einer perspektivischen Darstellung (Fig. 9), einer Draufsicht (Fig. 10), einer Seitenansicht (Fig. 11), einer Ansicht von unten (Fig. 12) und einer Schnittansicht (Fig. 13) zeigen.

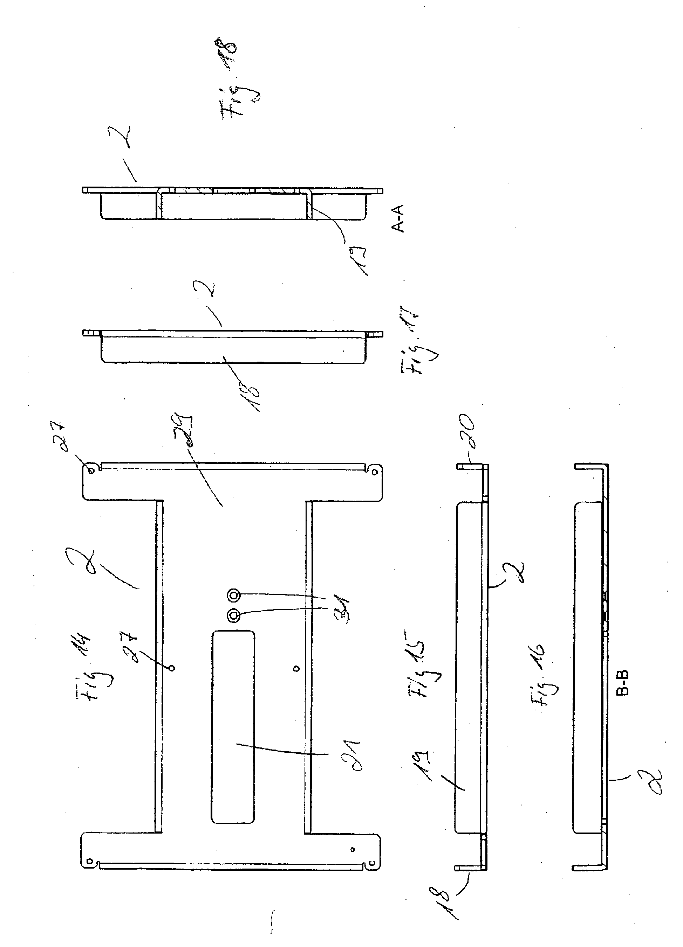

In den Figuren 14 bis 18 ist das obere Rahmenteil 2 in einer entsprechenden Draufsicht (Fig. 14) und Seitenansichten (Fig. 15 und Fig. 17) sowie Schnittansichten (Fig. 16 und Fig. 18) gezeigt. In diesen Darstellungen ist noch einmal deutlich zu erkennen, wie die obere Rahmenkonstruktion in Form des oberen Rahmenteils 2 aus einer ebenen Platte, beispielsweise aus Edelstahl, durch entsprechendes Einbringen von Schnitten und Umkanten entsprechender Bereiche sowie durch Ausbildung von Ausnehmungen und Öffnungen in einfacher Weise hergestellt werden kann.

So wird beispielsweise die Ausnehmung 21 durch einfaches Ausschneiden der entsprechenden Öffnung geschaffen, während die Öffnungen 31 für die Aufnahme der Schraubverbindung zur Verbindung des oberen Rahmenteils mit der Wägezelle 8 sowie die entsprechenden Öffnungen 27 zur Aufnahme der Auflager 26 durch einfaches Bohren eingebracht werden können. Um die abgewinkelten Bereiche 18, 19 und 20 zu bilden, werden zunächst teilweise entsprechende Bereiche aus einer ebenen, rechteckigen Platte ausgeschnitten und zudem entsprechende Schnitte eingebracht, um Bereiche freizuschneiden, die durch einen Biegeprozess zu einem abgewinkelten Bereich gemacht werden sollen. Entsprechend kann eine oberes Rahmenteil, genauso wie nachfolgend ein unteres Rahmenteil ausschließlich durch Trennverfahren, insbesondere mechanische Trennverfahren oder Laserstrahlschneiden oder dergleichen, und Biegeprozesse hergestellt werden, ohne dass es aufwendiger Schweißungen und deren Nachbearbeitung bedarf.

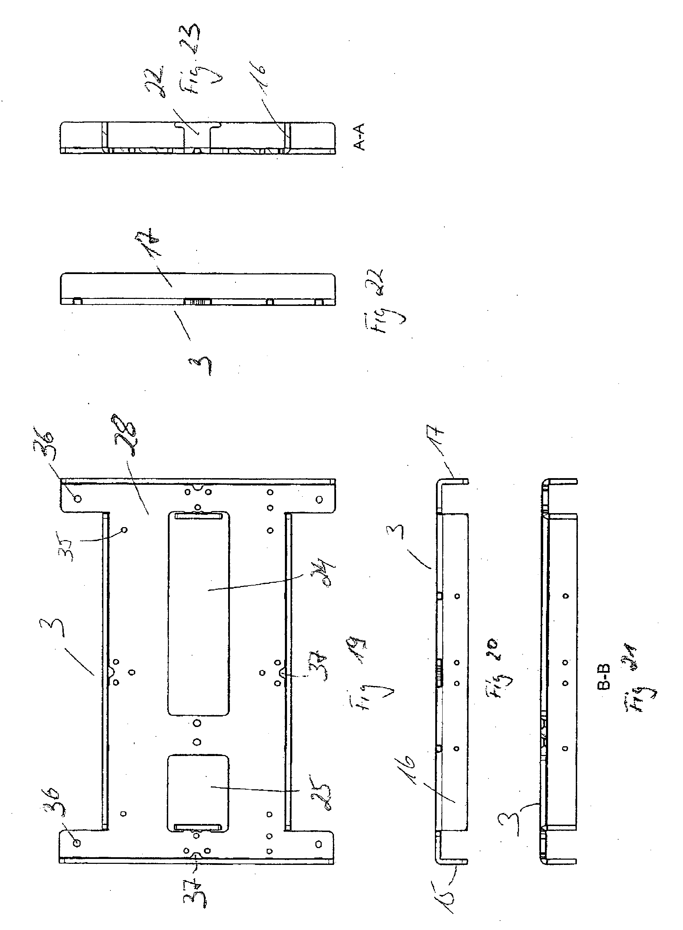

Die Figuren 19 bis 23 zeigen das untere Rahmenteil 3 in einer Draufsicht (Fig. 19), in Seitenansichten (Fig. 20 und Fig. 22) sowie in Schnittansichten entlang der Schnittlinien A und B aus Fig. 1 (Fig. 23 und Fig. 21). Auch hier wird deutlich, dass das untere Rahmenteil 3 in einfacher und effektiver Weise durch reines mechanisches Trennen, Laserstrahltrennen oder dergleichen und entsprechende Biegeprozesse in einfacher Weise hergestellt werden kann. Durch die abgewinkelten Bereiche 15, 16, 17 (s. Fig. 20) wird in gleicher Weise wie beim oberen Rahmenteil 2 eine Versteifung des entsprechenden Rahmenteils 2, 3 bewirkt, sodass das obere und das untere Rahmenteil 2, 3 eine ausreichende Festigkeit, insbesondere Verwindungsfestigkeit aufweisen.

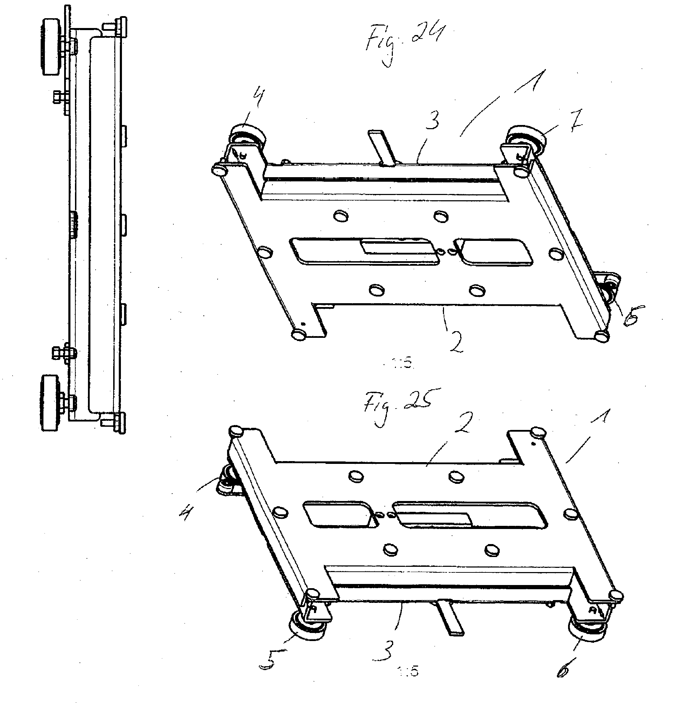

Die Figuren 24 und 25 zeigen die Tischwaage 1 jeweils noch einmal in einer perspektivischen Darstellung, wobei hier wiederum die Abdeckung 30 weggelassen worden ist.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen werden oder andersartige Kombinationen von Merkmalen vorgenommen werden ohne das der Schutzbereich der beigefügten Ansprüche verlassen wird. Die vorliegende Erfindung umfasst insbesondere sämtliche Kombinationen aller Einzelmerkmale, die hier vorgestellt worden sind.

## Patentansprüche

1. Tisch- oder Plattformwaage mit einer oberen Rahmenkonstruktion (2) und einer unteren Rahmenkonstruktion (3), die über eine Wägezelle (8) miteinander so verbunden sind, dass die untere Rahmenkonstruktion (3) und die obere Rahmenkonstruktion (2) an der Wägezelle (8) befestigt sind,
wobei beide Rahmenkonstruktionen einstückig aus einer monolithischen Platte gefertigt sind, wobei die Rahmenkonstruktion (2,3) eine homogene, abgewinkelte Platte ohne stoffschlüssige Verbindungen aufweist und Ausnehmungen (21, 24,25) und/oder abgewinkelte Bereiche (15 bis 20, 22) umfasst,
**dadurch gekennzeichnet, dass**
die Rahmenkonstruktion (2,3) an ihrem äußeren Umfangsrand teilweise abgewinkelte Bereiche aufweist, die quer zur Hauptfläche der Platte angeordnet sind, so dass Kantenwinkel ausgebildet sind.

2. Tisch- oder Plattformwaage nach Anspruch 1,
**dadurch gekennzeichnet, dass**
an gegenüberliegenden Kanten zumindest teilweise abgewinkelte Bereiche angeordnet sind, die sich in derselben Richtung von der Hauptfläche der Platte erstrecken, um U-förmige Profile auszubilden.

3. Tisch- oder Plattformwaage nach Anspruch 1 oder 2,
**dadurch gekennzeichnet, dass**
im Krümmungsbereich, der die abgewinkelten Bereiche mit der Hauptfläche verbindet, teilweise Öffnungen vorgesehen sind.

4. Tisch- oder Plattformwaage nach einem der vorhergehenden Ansprüche,
**dadurch gekennzeichnet, dass**
ein oder mehrere Anbauteile (11,12,13) an der Rahmenkonstruktion (2,3) angeordnet sind.

5. Tisch- oder Plattformwaage nach einem der vorhergehenden Ansprüche,
**dadurch gekennzeichnet, dass**
die obere und untere Rahmenkonstruktion (2,3) so angeordnet sind, dass die abgewinkelten Bereiche so orientiert sind, dass sie aufeinander zuweisen und/oder sich zumindest teilweise überlappen.

6. Verfahren zur Herstellung einer Tisch- oder Plattformwaage nach einem der Ansprüche 1 bis 5,
**dadurch gekennzeichnet, dass**
eine einstückige, monolithische Platte ausgewählt wird und in ihrer Form zugeschnitten wird, mit Ausnehmungen und/oder Öffnungen und Schnitten versehen wird und Randbereiche an den Kanten des äußeren Rands umgebogen werden, um eine Rahmenkonstruktion zu bilden.

7. Verfahren nach Anspruch 6,
**dadurch gekennzeichnet, dass**
die Platte durch Laserstrahlschneiden und/oder in einer automatisierten Biegemaschine bearbeitet wird.

## Claims

1. Table or platform scale with an upper frame structure (2) and a lower frame structure (3) which are connected to each other via a load cell (8) such that the lower frame structure (3) and the upper frame structure (2) are attached to the load cell (8), wherein both frame structures are formed in one piece from a monolithic plate, wherein the frame structure (2, 3) has a homogeneous, angled plate without material connections and comprises recesses (21, 24, 25) and/or angled sections (15 to 20, 22),
**characterised by** the fact that
parts of the outer circumferential rim of the frame structure (2, 3) have angled sections, which are arranged transversely to the main surface of the plate such that chamfer angles are formed.

2. Table or platform scale in accordance with claim 1,
**characterised by** the fact that
at opposite edges, angled sections are arranged in at least parts and extend in the same direction from the main surface of the plate to form U-shaped profiles.

3. Table or platform scale in accordance with claim 1 or 2,
**characterised by** the fact that
openings are provided in parts of the curvature region where the angled sections are connected to the main surface.

4. Table or platform scale in accordance with any of the previous claims,
**characterised by** the fact that
one or more attachments (11, 12, 13) are arranged at the framework structure (2, 3).

5. Table or platform scale in accordance with any of the previous claims,
**characterised by** the fact that
the upper and lower frame structures (2, 3) are arranged such that the angled sections are oriented so as to face each other and/or at least partially overlap.

6. Method for making a table or platform scale in accordance with any of claims 1 to 5,
**characterised by** the fact that
a one-piece, monolithic plate is selected and is cut to shape, is provided with recesses and/or openings and cuts, and rim sections at the edges of the outer rim are bent to form a frame structure.

7. Method in accordance with claim 6,
**characterised by** the fact that
the plate is machined by laser beam cutting and/or processed in an automatic bending machine.

## Revendications

1. Balance de table ou de plateforme avec une construction de cadre supérieur (2) et une construction de cadre inférieur (3) qui sont reliées l'une à l'autre par une cellule de pesage (8) de telle manière que la construction de cadre inférieur (3) et la construction de cadre supérieur (2) sont fixées à la cellule de pesage (8), cependant que les deux constructions de cadre sont fabriquées en une pièce dans une plaque monolithique, cependant que la construction de cadre (2, 3) présente une plaque homogène coudée sans liaison de matières et comprend des évidements (21, 24, 25) et/ou des zones coudées (15 à 20, 22), **caractérisée en ce que** la construction de cadre (2, 3) présente, sur son bord périphérique extérieur, des zones partiellement coudées qui sont placées transversalement par rapport à la surface principale de la plaque si bien que des angles d'arête sont formés.

2. Balance de table ou de plateforme selon la revendication 1, **caractérisée en ce que** des zones au moins partiellement coudées qui s'étendent dans la même direction de la surface principale de la plaque sont placées sur des arêtes opposées pour former des profils en forme de U.

3. Balance de table ou de plateforme selon la revendication 1 ou 2, **caractérisée en ce que** des ouvertures partielles sont prévues dans la zone de courbure qui relie les zones coudées à la surface principale.

4. Balance de table ou de plateforme selon l'une des revendications précédentes, **caractérisée en ce qu'**une ou plusieurs pièces à rapporter (11, 12, 13) sont placées sur la construction de cadre (2, 3).

5. Balance de table ou de plateforme selon l'une des revendications précédentes, **caractérisée** en ce la construction de cadre supérieur et la construction de cadre inférieur (2, 3) sont placées de telle manière que les zones coudées sont orientées de telle manière qu'elles sont tournées l'une vers l'autre et/ou se chevauchent au moins partiellement.

6. Procédé pour la fabrication d'une balance de table ou de plateforme selon l'une des revendications précédentes 1 à 5, **caractérisée en ce qu'**une plaque monolithique en une pièce est sélectionnée et est découpée dans sa forme, est pourvue d'évidements et/ou d'ouvertures et de coupes et que des zones de bord sur les arêtes du bord extérieur sont recourbées pour former une construction de cadre.

7. Procédé selon la revendication 6, **caractérisé en ce que** la plaque est travaillée par découpe au rayon laser et/ou dans une cintreuse automatisée.
